# EUROPEAN PATENT APPLICATION

(11) **EP 2 079 189 A1**
(43) Date of publication of application: **15.07.2009**
(21) Application number: 08250094.3
(22) Date of filing: 09.01.2008
(51) Int. Cl.: H04L 12/24, H04L 12/56

(54) **MPLS function invocation scheme and related aspects**

(71) Applicant: British Telecommunications public limited company, 81 Newgate Street London EC1A 7AJ (GB)
(72) Inventor: The designation of the inventor has not yet been filed
(74) Representative: Lofting, Coreena Fiona Anne

(57) **Abstract**

A multi-protocol label switched communications (MPLS) network comprising a plurality of multi-protocol label switched communications nodes further comprises a control plane enabling said MPLS network to operate in a connection-oriented packet-switched mode; a transmitting node arranged to generate a MPLS traffic unit having a MPLS header and having a processor arranged to assign one or more predetermined bits of the Time-To-Live (TTL) field of said header to indicate said function, and further comprising a transmitter arranged to transmit said packet to a node of said multi-protocol label switched network; a receiving node arranged to receive a MPLS traffic unit generated by said transmitting node, wherein when said receiving node receives said MPLS traffic unit and processes said header field values said function is invoked. The reuse of the TTL field enables OAM functionality to be provided in a fully CO-PS mode operating MPLS network.

## Description

The present invention relates to a method of remotely invoking a function in a connection oriented packet-switched (CO-PS) multi-protocol label switched (MPLS) communications network, particularly but not exclusively to a method which invokes an operation, administration, and/or maintenance (OAM) function by reassigning the Time-To-Live (TTL) field of a MPLS packet.

MPLS is a data transport mechanism for packet-switched computer and telecommunications networks. MPLS has been designed to provide a unified transport service for both circuit-based clients and packet-switching clients and can be used to carry many different types of traffic, for example, Internet Protocol (IP) packets as well as native Asynchronous Transfer Mode (ATM), Ethernet and Synchronous Optical NETwork (SONET) frames. More recently, MPLS has evolved and CO-PS mode MPLS networks that respect the requirements of a connection are now known in the art.

Several problems with MPLS are known in the art and include issues with LSP Ping (as an OAM function) for detecting/diagnosing defects in Label Switch Paths (LSP) and the increased requirement for the carriage of Ethernet clients with bit rates 1G/10G/+ which MPLS networks based on a Label Distribution Protocol (LDP) using PseudoWires (PWs) will find very difficult to support. Although some solutions have been proposed to mitigate the above problems, they are actually symptoms of deeper architectural causal problems, one of which is the use of the LDP form of MPLS which is also often used with Equal Cost Multi-Path (ECMP) and Penultimate Hop Popping (PHP), and these also cause problems. A limitation of these known solutions is that LDP (and PHP) violate the architectural requirement in MPLS that a connection must only have a single source and that traffic units must not be re-ordered. ECMP also violates transparency requirements of a client/server layer network relationship. Moreover, LDP/PHP/ECMP only account for some of the simpler architectural problems in MPLS. Other problems include:
i) MPLS does not treat its clients consistently and so cannot form a proper layer network as it does not have consistent Characteristic Information (Cl). For example, MPLS has a special relationship with IP (which can appear as a peer traffic unit on a MPLS interface, or be a null encapsulated client) and some fields of the MPLS traffic unit (especially the label field) do not have consistent functional semantics. Further, the MPLS traffic unit is not functionally complete, and in particular it has no OAM flag field.
ii) Neither MPLS nor PWs provide a transparent client/server relationship. Transparency here means that the server does not attempt to infer any meaning from the bit structure of the client traffic units and the server must not modify the client traffic units in any way.
iii) LDP and PHP each cause a merging behaviour which, by violating the rules of a connection, prevents deterministic resource assignment/management and, as a consequence, makes other operational functions (such as fault detection/handling and performance monitoring) more complex and costly to implement. As a result of this resources cannot be deterministically managed on a per customer/service instance. This means that the whole MPLS network has to be designed and operated to the demands of the most stringent customer service level agreement which is not cost effective for MPLS providers.
iv) The MPLS traffic unit has an inadequate functional field structure and in particular the label field has too many semantics (i.e., a MPLS traffic unit does not have consistent Cl), which means that when connectivity errors occur a wrong decision might be made when interpreting the semantic of the label field.
vi) MPLS does not have an Out Of Band (OOB) control/management plane solution as LDP prevents this.

The lack of a proper OAM flag field in the MPLS traffic unit is a problem that the present invention seeks to address.

### SUMMARY STATEMENTS OF THE INVENTION

One aspect of the invention seeks to provide a method of invoking a function at a node in a multi-protocol label switched (MPLS) communications network operating in a connection oriented packet switched (CO-PS) mode, the method comprising at the node:
receiving a MPLS traffic unit to which one or more bits of the time-to-live field of a header of a data packet have been re-assigned to invoke said function;
processing the header of said MPLS traffic unit to extract information from said one or more bits of said TTL field;
identifying the function to be invoked by the information extracted from the TTL field; and
causing said function to be invoked.

In one embodiment, said one or more bits of said TTL field form a single word lexicon for invoking said function.

In one embodiment, one or more bits of said TTL field form a flag field for invoking said function.

In one embodiment, said function to be invoked comprises an operations, administration and/or maintenance (OAM) function.

In one embodiment, said OAM function is defined by an MPLS OAM standard.

In one embodiment, said MPLS communications network implements said connection oriented packet switched (CO-PS) mode by requiring specific traffic units having a MPLS communications network header contain a label field whose value is known in the MPLS network to indicate the type of management data the packet is conveying. Ideally the label field value is "well-known" in that it is known in a network-wide sense.

In one embodiment, said management data provides control plane functionality.

In one embodiment, said management data provides management plane functionality.

In one embodiment, control plane functionality is assigned a different label field value from the label field value assigned to management plane functionality. Ideally this label field value is "well-known" in that it is known in a network-wide sense.

In one embodiment, said label field value is unique in the MPLS network and comprises a value reserved as a globally unique value according to a MPLS standard between the value of 4 and 13 or 15.

A second aspect of the invention seeks to provide apparatus arranged to remotely invoke a function in a multi-protocol label switched communications (MPLS) network having a control plane enabling the network to operate in a CO-PS mode, apparatus comprising:
a MPLS traffic unit generator arranged to generate a MPLS traffic unit having a multi-protocol label switched communications network header;
a processor arranged to assign one or more bits of the time-to-live field of said header to indicate said function,
a transmitter arranged to transmit said MPLS traffic unit to other apparatus in said MPLS network, whereby when other MPLS apparatus in said MPLS network receives said traffic unit and processes said header field values, said other apparatus causes said function to be invoked.

Another aspect of the invention seeks to provide a signal comprising a multi-protocol label switched (MPLS) communications traffic unit transmitted in a MPLS communications network, the traffic unit comprising a header in which one or more bits of the time-to-live field represent a function to be invoked by apparatus receiving said signal in said MPLS communications network.
Another aspect of the invention seeks to provide a multi-protocol label switched (MPLS) communications network comprising a plurality of multi-protocol label switched communications nodes, the network comprising:
a control plane enabling said MPLS network to operate in a connection-oriented packet-switched mode;
a transmitting node arranged to generate a MPLS traffic unit having a MPLS header and having a processor arranged to assign one or more predetermined bits of the time-to-live field of said header to indicate said function, and further comprising a transmitter arranged to transmit said packet to a node of said multi-protocol label switched network;
a receiving node arranged to receive a MPLS traffic unit generated by said transmitting node, wherein when said receiving node receives said MPLS traffic unit and processes said header field values said function is invoked.

The aspects of the invention and preferred embodiments are also as set out by the accompanying claims.

Thus, where a MPLS network is provided with a Control-Plane (CP) and/or Management-Plane (MP) which enables the MPLS network to function in a CO-PS mode, one embodiment of the invention seeks to provide a solution to the lack of any OAM flag functionality being supported in a MPLS header by reassigning one bit of the 8-bit TTL field of the MPLS header to provide an OAM flag function. Other embodiments may use more than one bit of the 8-bit TTL field. One way of providing a MPLS network with an OOB CP and/or MP is to assign a network-wide label field header value to designate a MPLS traffic unit as carrying CP/MP protocols.

Aspects of the invention as set out above and in the accompanying independent claims may be combined with each other and with any of the preferred embodiments and accompanying dependent claims in any suitable form apparent to one of ordinary skill in the art.

The preferred embodiment of the invention will now be described with reference to the accompanying drawings which are by way of example only and in which:
Figure 1 shows schematically a MPLS header known in the art;
Figure 2 shows schematically an embodiment of a MPLS CP/MP according to the invention; and
Figure 3 shows schematically a MPLS header according to an embodiment of the invention.

The best mode of the invention will now be described with reference to the accompanying drawings, which may omit one or more details a person of ordinary skill in the art would find apparent as necessary to implement the invention for the sake of clarity.

As is well known in the art, MPLS is provided as an intermediate layer between the layer 2 and layer 3 headers of a typical packet. Several MPLS standards have already been defined by the Internet Engineering Task Force (IETF) standards body and these documents are considered to be incorporated herein by reference. The ITEF Request for Comments document RFC 3032 (amongst others) describes MPLS Label Stack Encoding and is incorporated herein by reference.

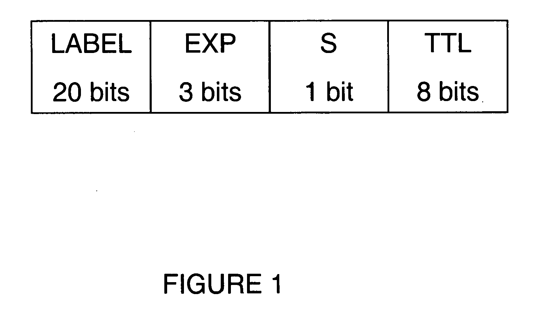

Figure 1 of the accompanying drawings shows a 32-bit MPLS header as is known in the art. In Figure 1, the MPLS header comprises four fields: an 8-bit time to live (TTL) field, a 1-bit stack (S) function field, a 3-bit field (EXP) for experimental functions, and a 20-bit label field as are well known in the art. The 20-bit label field provides 2²⁰ possible label values which, apart from sixteen reserved values (0 to 15), are of local link significance only in the MPLS network. The sixteen reserved values are globally well-known label field values. Of the sixteen reserved label values available, label values 0 to 3 and 14 already have a defined use. Label values 4 to 13 and 15 are also reserved but do not have predefined usage according to the original MPLS standards, although one or more values may be reserved for other use without being detrimental to the implementation of some embodiments of the invention.

According to one embodiment of the invention, the MPLS communications network must be capable of functioning in an architecturally correct CO-PS mode. Operating in CO-PS mode requires the OOB CP/MP protocols to operate on a hop-by-hop basis between pairs of MPLS network nodes so that at each MPLS network node the header of the MPLS traffic unit is processed ("popped") to enable access to the higher-layer CP/MP communications protocols at that node as appropriate. When in an architecturally correct mode to implement an embodiment of the invention, the CO-PS layer MPLS network is able to invoke at each MPLS node a higher CP/MP communications protocol capable of imposing a Time-To-Live type functionality, e.g. the CP/MP protocols may run over IP in the logical OOB CP/MP network of the overall CO-PS network system.

Thus in one embodiment of the invention, providing the MPLS CO-PS layer network is operating in a mode which enables higher layer CP/MP protocols to be accessed at each MPLS mode in the MPLS communications network which have their own TTL-equivalent functionality, the MPLS traffic units themselves do not require a TTL function to be provided. This renders the TTL field in the MPLS traffic units redundant and enables the TTL field to be reused to provide other functionality. For example, this field can now be reassigned in MPLS to other functions such as Operations, Administration and Maintenance (OAM) functions without it being potentially detrimental to the MPLS network's performance. In one embodiment, a predetermined number of one or more bits of the TTL field is/are reassigned to function as a flag for invoking OAM functionality at an MPLS mode. In an embodiment where not all of the 8-bits of the TTL field are utilised for invoking OAM-type functionality, the remaining bits can be used to invoke other types of functionality.

In an architecturally correct COPS mode MPLS network, all MPLS traffic units are capable of re-using the TTL field. However, although it is possible to implement the invention just for traffic relating to the data plane (DP) it can also be used for traffic belonging to the management plane (MP) (and/or control plane (CP)).

In one embodiment of the invention having this type of network, the CO-PS mode functionality is imposed by the CP and/or MP and the TTL field is re-used only for some DP traffic but not for other DP traffic. This may be of use if a hybrid MPLS network is provided in which the OOB CP and/or MP operates in a connection-oriented mode for some DP traffic but other types of DP traffic are transported by MPLS traffic units operating in a connectionless mode.

In one embodiment of the invention, therefore, the MPLS network respects the requirements of a connection (the most important of which is that a connection can only have a single source) and has a CP and/or MP which enables the MPLS network to set-up connections without loops. These are well-known behaviours for both CO-PS and connection-oriented circuit-switched (CO-CS) mode networks, and they have been used in many existing connections technologies (e.g. ATM, FR, SDH, PSTN) where a control and/or management plane is used to set-up/tear-down connections. In this embodiment, the CP and/or MP provide the necessary routing/signalling information to ensure each connection does not loop and to ensure sufficient resource reservation.

In an exemplary embodiment of the invention, a CP and/or MP capable of enforcing CO-PS connectivity is provided by the use of a special label field value in the header of a MPLS traffic unit (or equivalently, MPLS packet) to indicate the type of functionality the MPLS traffic unit relates to. This special label field value must be known (with respect to its functional semantic) on a given link and should ideally be unique within a MPLS network, i.e., it should have a network-wide well-known functional significance. In one embodiment of the invention, the special label field value is selected from a value remaining available in the 0-15 reserved set of MPLS values. The special label value assigned indicates that the MPLS traffic unit (i.e., the MPLS packet) is carrying control or management protocols as opposed to "normal" client traffic. By assigning a globally unique reserved label field value, it is possible for one embodiment of the invention to support a logically out of band control/management plane in a MPLS network.

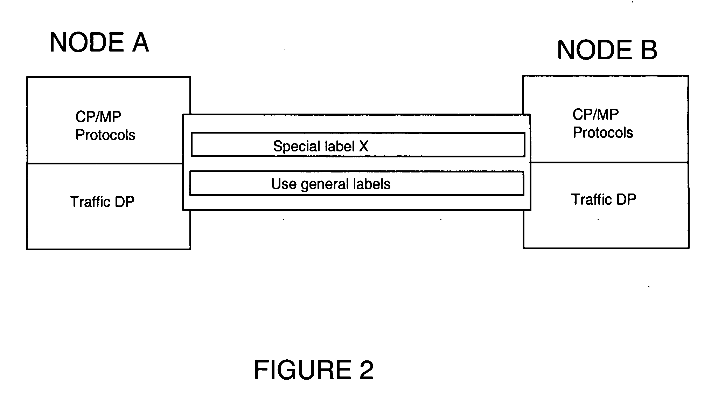

The use of such a "special" label value is shown schematically in Figure 2 of the accompanying drawings. Figure 2 also shows schematically how MPLS traffic units forming the data plane (DP) traffic between two nodes A and B use the unreserved general labels (of which 2²⁰-16 are available).

The term "control plane" is defined herein as functionality which is associated with the protocols relating to network topology discovery, route calculation and signalling. The control plane may comprise any suitable communications protocols which implement the different functions. Effectively the control plane is a sub-set of the connectivity configuration aspects of the management plane (or equivalent the connectivity configuration level of functionality) by which the apparatus (for example, the MPLS network nodes) are connected by a communications network support. In this context, the connectivity configuration management functions which are related to the specific tasks of discovery/assignment/managing connectivity and/or signalling resources in the communications network are generally referred herein to as (belonging to) the control plane. Other management functions (i.e., ones not related to the above specific tasks) are referred to herein as (belonging to) the management plane.

In Figure 2, the protocols that implement the control plane (CP) and/or management plane (MP) functionality are carried by MPLS traffic units which have headers to which have been assigned one or more specially predetermined and ideally network-wide known values. In the best mode of the invention currently contemplated by the inventor, a special label value has a predetermined label value between 4 and 13 and15. In the embodiment shown in Figure 2, to implement OOB CP and/or MP functionality in the MPLS network, all CP and/or MP traffic respectively is allocated a special network-wide label value reserved for the relevant function. This means that when a node receives a packet with the reserved label, it can be recognised as CP and/or MP traffic and is treated accordingly.

In one embodiment of the invention in which an OOB CP and/or MP is provided, a special network-wide label value (for example, "X") indicates that the MPLS traffic unit conveys CP protocol information and another special network-wide label value (for example, "Y") indicates that the MPLS traffic unit conveys MP protocol information.

In another embodiment of the invention in which an OOB CP and/or MP is provided, a set of reserved labels are assigned to different CP and MP protocols; for example, label value "X" for routing, label value "Y" for signalling, and label value "Z" to indicate any other MP function. This is not a preferred approach of the inventor, however, as the number of globally unique standard reserved label values which have not already been assigned in MPLS is limited, and if another label value is reserved then it may need to be reserved in a network wide manner as mentioned hereinabove.

In another embodiment, and possibly the best practical embodiment of the invention in which an OOB CP and/or MP is provided, a single special network-wide label ("Z" say) is used to convey both CP and MP protocols.

In all of the above embodiments in which an OOB CP and/or MP is provided (albeit to varying degrees), a MPLS network node receiving a traffic unit (i.e., a packet) with the reserved label field value in the MPLS header needs to be able to determine which specific higher layer function/protocol (in the CP or MP) the information is destined for. This requires the receiving MPLS network node to be able to resolve what type of function/protocol is being provided by a traffic unit which has a special network-wide value in its header label field. One way of doing this when the Internet Protocol (IP) is used inside the said labelled traffic units is to use some or all of the IP's quintuple fields of Destination Address (DA), Source Address (SA), Protocol Identifier (PID), Destination Port (D_Port), Source Port (S_Port) to identify the specific intended target CP or MP protocol.

The provision of an OOB CP and/or MP not only provides an important architectural security benefit but it also enables the use of PseudoWires (PWs) to be avoided. PWs are a direct consequence of the fact that the Label Distribution Protocol (LDP) forces MPLS to treat IP differently from 'all other' clients. As the above type of OOB CP and/or MP means that in principle all data plane clients (including IP) can now be treated in a consistent manner, it also removes to some extent the need for PWs.

A further significant benefit of what has been described so far is that Service Level Agreements can be provided specific to a customer's needs, and there is no longer any need to design and/or operate the whole MPLS network to the service level agreement of the most demanding customer as was done in the prior art for the LDP type of MPLS in those embodiments where an OOB CP and/or MP was not provided.

The above embodiments which describe the use of a special network-wide label value enables a MPLS network to implement OOB management/control plane functionality are not prescriptive as to the suite of CP/MP protocols that can be used to implement the invention. Any suitable set of MP/CP protocols which enable the MPLS network to implement a CO-PS mode layer network that respects the single source requirement of a connection in which loops are prevented and in which traffic units are never re-ordered during normal operation can be used to implement the invention. As long as no loops can occur when routing MPLS traffic units in the MPLS network, the TTL field of the MPLS header is effectively redundant. Accordingly, a consequence of implementing proper connections in MPLS is that the 8-bit TTL field in the MPLS traffic unit is serving no value.

The OAM of a CO-PS layer network is intrinsically associated with the trail termination function (and not the higher, architecturally, client/server adaptation functions). It is therefore important that the OAM itself and the OAM flag are associated with the traffic units of the connection irrespective of the client the connection is carrying (which may be no client 'at the present time' if the connection is a protection path for example, but nevertheless still needs to be monitored with OAM to ensure it is still functioning).

Accordingly, in one embodiment of the invention, a MPLS traffic unit may either (i) comprise one or more special label value(s) having network-wide uniqueness and which indicate the MPLS traffic unit conveys control and/or management plane data or (ii) comprise normal forwarding labels which indicate the MPLS traffic unit is carrying client traffic, but in both cases one or more or all of the 8-bits of the TTL field of the MPLS header are no longer used to provide a TTL function. In principle, we could keep the original TTL field and semantics in the case of the MPLS traffic units carrying CP/MP protocols, but since these OOB signalling links terminate in pairs of adjacent (i.e. 1-hop away) MPLS nodes there is no need to. Further, although there may be no need to reassign the TTL field to carry an OAM flag and carry an OAM protocol in the payload in the case of MPLS traffic units carrying CP/MP protocols (as the higher layer CP/MP protocols themselves will probably have their own OAM-like integrity checks/timers), it is probably sensible to have an OAM function at the MPLS level even for the MPLS packets that carry the CP/MP protocols.

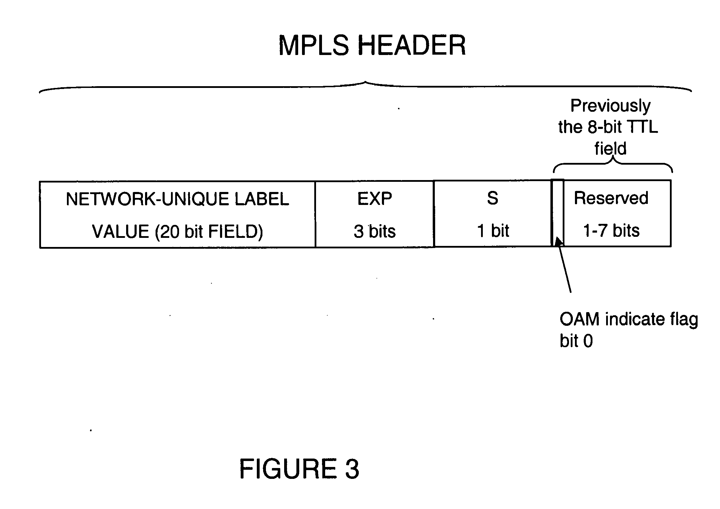

Where a MPLS network is able to operate as a CO-PS mode layer network one or more bits of the TTL field are instead used to flag to a receiving network node that one or more management functions are to be performed. This enables management functions such as, for example, one or more operations, administration and management (or maintenance) (OAM) functions to be invoked. Such OAM functions are well known to those of ordinary skill in the art from, for example, the ITU MPLS OAM standard Y.1711. A MPLS traffic unit in which the TTL field in the header has been replaced with a 1-bit OAM flag field (the remaining 7 bits being reserved) according to one embodiment of the invention is shown schematically in Figure 3 of the accompanying drawings.

In alternative embodiments of the invention, a more general treatment of the re-assigned 8-bit TTL field uses the entire 8-bit TTL field to provide a single 8-bit word. This provides the largest code space as it enables a maximum of 256 8-bit words to be provided in this single lexicon.

Other embodiments of the invention re-use the 8-bit TTL field differently. For example, a smaller code space results from treating it as a set of 8 independent flags, i.e. there are 8 different lexicons here, each one having only 2 1-bit words (i.e. 0 or 1). Alternatively, one could use it as a single flag field (single lexicon) with only 2 8-bit words, i.e. 00000000 or 111111111 say, with all other 8-bit words being 'not allowed'.

In the preferred embodiment of the invention, and as shown in Figure 3, one bit of this 8 bit field is used as an OAM flag field with 2 1-bit words (for example, "1" => OAM payload, "0" => traffic payload). This leaves the remaining 7 bits available for other usage, for example, as a 2⁷ =128 word single lexicon or as 7 independent additional flags, or as any apparent combination of a single word lexicons and/or independent flags apparent to one of ordinary skill in the art.

Where a single bit is used to provide an OAM flag, in the preferred embodiment it is the first bit in the order transmitted to line, but in other embodiments one or more other bits are used instead.

Those of ordinary skill in the art may be aware of many alternative features having functional equivalence to the features described hereinabove in the context of the invention, and the description should be read as implicitly including such functional equivalents to the described features unless these are explicitly excluded.

For example, the invention may be applied to Transport MPLS (T-MPLS) as well as to MPLS to provide an OAM flag for this communications protocol as well.

The scope of the invention is as set out by the accompanying claims, which are to be construed in accordance with the description and the knowledge of persons of ordinary skill in the art.

### The text of the abstract repeated below is hereby incorporated into the description:

A multi-protocol label switched communications (MPLS) network comprising a plurality of multi-protocol label switched communications nodes further comprises a control plane enabling said MPLS network to operate in a connection-oriented packet-switched mode; a transmitting node arranged to generate a MPLS traffic unit having a MPLS header and having a processor arranged to assign one or more predetermined bits of the Time-To-Live (TTL) field of said header to indicate said function, and further comprising a transmitter arranged to transmit said packet to a node of said multi-protocol label switched network; a receiving node arranged to receive a MPLS traffic unit generated by said transmitting node, wherein when said receiving node receives said MPLS traffic unit and processes said header field values said function is invoked. The reuse of the TTL field enables OAM functionality to be provided in a fully CO-PS mode operating MPLS network.

## Claims

1. A method of invoking a function at a node in a multi-protocol label switched communications network operating in a connection oriented packet switched mode, the method comprising at the node:
receiving a multi-protocol label switched traffic unit to which one or more bits of the Time-To-Live field of a header of a MPLS traffic unit have been re-assigned to invoke said function;
processing the header of said multi-protocol label switched traffic unit to extract information from said one or more bits of said Time-To-Live field;
identifying the function to be invoked by the information extracted from the Time-To-Live field; and
causing said function to be invoked.

2. A method as claimed in any previous claim, wherein said one or more bits of said Time-To-Live field form a single word lexicon for invoking said function.

3. A method as claimed in any previous claim, wherein one or more bits of said Time-To-Live field form a flag field for invoking said function.

4. A method as claimed in any previous claim, wherein said function to be invoked comprises an operations, administration and/or maintenance function.

5. A method as claimed in claim 4, wherein said an operations, administration and/or maintenance function is defined by an multi-protocol label switched an operations, administration and/or maintenance standard.

6. A method as claimed in any previous claim, wherein said multi-protocol label switched communications network implements said connection oriented packet switched (CO-PS) mode by requiring specific traffic units having a multi-protocol label switched communications network header contain a label field whose value is known in the multi-protocol label switched network to indicate the type of management data the packet is conveying.

7. A method as claimed in claim 6, wherein said management data provides control plane functionality.

8. A method as claimed in claim 6 or 7, wherein said management data provides management plane functionality.

9. A method as claimed in claim 8, wherein control plane functionality is assigned a different label field value from the label field value assigned to management plane functionality.

10. A method as claimed in any one of claims 6 to 9, wherein said label field value is unique in the multi-protocol label switched network and comprises a value reserved as a globally unique value according to a multi-protocol label switched standard between the value of 4 and 13 or 15.

11. Apparatus arranged to remotely invoke a function in a multi-protocol label switched communications network having a control plane enabling the network to operate in a CO-PS mode, apparatus comprising:
a multi-protocol label switched traffic unit generator arranged to generate a multi-protocol label switched traffic unit having a multi-protocol label switched communications network header;
a processor arranged to assign one or more bits of the Time-To-Live field of said header to indicate said function,
a transmitter arranged to transmit said multi-protocol label switched traffic unit to other apparatus in said multi-protocol label switched network, whereby when other multi-protocol label switched apparatus in said multi-protocol label switched network receives said traffic unit and processes said header field values, said other apparatus causes said function to be invoked.

12. A signal comprising a multi-protocol label switched communications traffic unit transmitted in a multi-protocol label switched communications network, the traffic unit comprising a header in which one or more bits of the Time-To-Live field represent a function to be invoked by apparatus receiving said signal in said multi-protocol label switched communications network.

13. A multi-protocol label switched communications network comprising a plurality of multi-protocol label switched communications nodes, the network comprising:
a control plane enabling said multi-protocol label switched network to operate in a connection-oriented packet-switched mode;
a transmitting node arranged to generate a multi-protocol label switched traffic unit having a multi-protocol label switched header and having a processor arranged to assign one or more predetermined bits of the Time-To-Live field of said header to indicate said function, and further comprising a transmitter arranged to transmit said packet to a node of said multi-protocol label switched network;
a receiving node arranged to receive a multi-protocol label switched traffic unit generated by said transmitting node, wherein when said receiving node receives said multi-protocol label switched traffic unit and processes said header field values said function is invoked.
